# EUROPÄISCHE PATENTANMELDUNG

(11) **EP 3 048 347 A1**
(43) Veröffentlichungstag der Anmeldung: **27.07.2016**
(21) Anmeldenummer: 16150419.6
(22) Anmeldetag: 07.01.2016
(51) Int. Cl.: F16K 31/04, F16K 47/08, F16K 1/00, F16K 1/16, F03B 3/06, F03B 13/00, F15B 21/08

(54) **STELLVENTIL**

(30) Priorität: 22.01.2015 DE 102015100929
(71) Anmelder: ARI-ARMATUREN ALBERT RICHTER GmbH & Co.KG., 33758 Schloss Holte-Stukenbrock (DE)
(72) Erfinder: RICHTER, Dieter, 33615 Bielefeld (DE); HACHMANN, Frank, 33758 Schloß Holte-Stukenbrock (DE)
(74) Vertreter: Dantz, Jan Henning

(57) **Zusammenfassung**

Ein Stellventil, das in ein Rohrleitungssystem einbaubar ist, mit einem einen Durchgang aufweisenden Gehäuse (1) und einem den Durchfluss eines durch das Rohrleitungssystem führbaren Mediums beeinflussenden Drosselorgan, ist so ausgebildet, dass im Durchgang ein an einen Stromerzeuger (9) angeschlossenes, durch das strömende Medium antreibbares Laufrad (5) angeordnet ist.

## Beschreibung

Die Erfindung betrifft ein Stellventil nach dem Oberbegriff des Anspruchs 1.

Derartige Stellventile, wie sie beispielsweise aus der EP 1 407 174 B1 bekannt sind, kommen als Regelventile in Rohrleitungssystemen zum Einsatz und dienen dort im Wesentlichen der Durchflussregelung eines in dem Rohrleitungssystem geführten Mediums, das flüssig, gas- oder dampfförmig ist.

Beispielsweise sind mit Stellventilen bestückte Rohrleitungssysteme in der Verfahrens-, Gebäude- oder Chemietechnik in Betrieb, ebenso wie im Schiffs- oder Anlagenbau. Dabei kann über die Durchflussregelung der Druck des Mediums, dessen Temperatur oder das Durchflussvolumen selbst geregelt werden.

Üblicherweise erfolgt die Durchflussregelung durch Drosselung im Durchfluss des Stellventils. Dabei wird die im Medium, beispielsweise im Fluid, gespeicherte kinetische Energie in einem wesentlichen Umfang in Reibungswärme umgewandelt.

Insbesondere unter dem Aspekt einer Energierückgewinnung ist diese sozusagen Energievergeudung inakzeptabel. Darüber hinaus beeinflusst die entstehende Reibungswärme das durch das Rohrsystem geführte Medium, was unter Umständen zu unerwünschten Reaktionen führt, beispielsweise bei chemischen Flüssigkeiten.

Auch bei Kaltwasseranlagen zum Betrieb von Klimaanlagen wirkt sich die Erwärmung durch die Androsselung nachteilig aus und ist überdies energetisch unsinnig.

Da solche Stellventile in einem Rohrleitungssystem vielfach in einer Mehrzahl eingesetzt werden, addieren sich diese Nachteile, die einem gewünschten optimierten Betrieb entgegenstehen.

Der Erfindung liegt die Aufgabe zugrunde, ein Stellventil der gattungsgemäßen Art so weiterzuentwickeln, dass sein Betrieb optimiert wird.

Diese Aufgabe wird durch ein Stellventil mit den Merkmalen des Anspruchs 1 gelöst.

Durch die Erfindung wird nun die Möglichkeit geschaffen, die in dem in der Rohrleitung bzw. im Rohrleitungssystem geführten Medium enthaltene kinetische Energie, die üblicherweise durch Pumpendruck eingebracht ist und die bislang, wie erwähnt, bei einer Regelung des Volumenstroms in Reibungswärme übergeht, nunmehr im Wesentlichen zum Betrieb eines Stromerzeugers zu nutzen. Dadurch kann Energie rückgewonnen und als Strom ins Netz eingespeist werden.

Die jeweils erzeugte Strommenge ergibt sich aus der Drosselung des Volumenstroms, die wiederum abhängig von unterschiedlichen Parametern ist. Hierzu zählen beispielsweise Temperatur, Druck, Volumen oder dergleichen.

Diese Parameter bilden die Grundlage für die Steuerung der Drehzahl des Laufrades über einen elektronischen Regelkreis, z.B. in einem Frequenzumrichter.

Bei einer Drosselung des Volumenstroms wird über den Stromerzeuger, beispielsweise einen Generator oder einen asynchronen Motor mit Frequenzumrichter inklusive Drehzahlregler in Abhängigkeit eines Eingangssignals, Energie dem Medienstrom entzogen.

Das durch den im Rohrleitungssystem herrschenden Druck angetriebene Laufrad bzw. das darauf wirkende Drehmoment wird mittels einer starren Kupplung an den besagten Generator oder den asynchronen Motor mit Frequenzumrichter übertragen, durch den bei Drosselung von Druck und/oder Volumen pro Zeiteinheit elektrische Energie erzeugt wird. Diese Energie kann dann über den Frequenzumrichter und gegebenenfalls Filter direkt in das vorhandene Stromnetz eingespeist werden. Denkbar ist auch die Speicherung der elektrischen Energie in einem Stromspeicher, z.B. einem Akkumulator.

Neben der Energierückgewinnung in Form der Stromerzeugung zeichnet sich die Erfindung vor allem dadurch aus, dass das durch das Rohrleitungssystem geführte Medium, insbesondere ein Fluid, bei der Drosselung des Volumenstroms nun sehr viel geringer durch entstehende Reibungswärme beeinflusst wird.

Insbesondere beim Betrieb einer Kaltwasseranlage, bei der das Fluid aus Kühlwasser besteht, ist dadurch eine genauere Temperaturregelung zu erreichen sowie ein wirtschaftlicherer Betrieb möglich, da auf die sozusagen Rückkühlung des insoweit erwärmten Fluids verzichtet werden kann.

Aber auch bei beispielsweise chemischen Fluids, die durch das Rohrleitungssystem geführt werden, bietet die Erfindung durch die nicht mehr auftretende bzw. reduzierte Erwärmung bei einer Regelung des Volumenstroms entsprechende Vorteile, vor allem da unbeabsichtigte, temperaturbedingte Reaktionen der chemischen Flüssigkeit nicht mehr eintreten können.

Nach einer vorteilhaften Weiterbildung der Erfindung ist die Abtriebswelle oder das Laufrad axial verstellbar gehalten, so dass bei einer entsprechenden Endstellung das Laufrad im Sinne eines Verschlusses fungiert, bevorzugt in Korrespondenz mit einem entsprechend gestalteten Ventilsitz.

Denkbar ist jedoch auch, bei ortsfester Anordnung des Laufrades das Ventil durch einen separaten Verschlusskörper zu drosseln oder zu verschließen, wozu sich insbesondere eine parallel zum Laufrad angeordnete Drosselscheibe eignet, die axial verschiebbar in der als Hohlwelle ausgebildeten Abtriebswelle des Laufrades geführt ist.

Zum vollständigen Verschluss des Ventils kann die Drosselscheibe an einem entsprechend gestalteten Ventilsitz anliegen.

Die Flügel des Laufrades sind in einer starren, einen optimalen Antrieb des Laufrades bewirkenden Stellung angeordnet. Denkbar ist aber auch, die Flügel in ihrem Anströmwinkel verstellbar zu gestalten, wobei allerdings der konstruktive Aufwand hierzu deutlich größer ist als bei einer starren Anordnung. Weitere vorteilhafte Ausbildungen sind in den Unteransprüchen gekennzeichnet.

Ein Ausführungsbeispiel der Erfindung wird nachfolgend anhand der beigefügten Zeichnung beschrieben.

Die einzige Figur zeigt ein erfindungsgemäßes Stellventil in einer teilweise geschnittenen perspektivischen Ansicht.

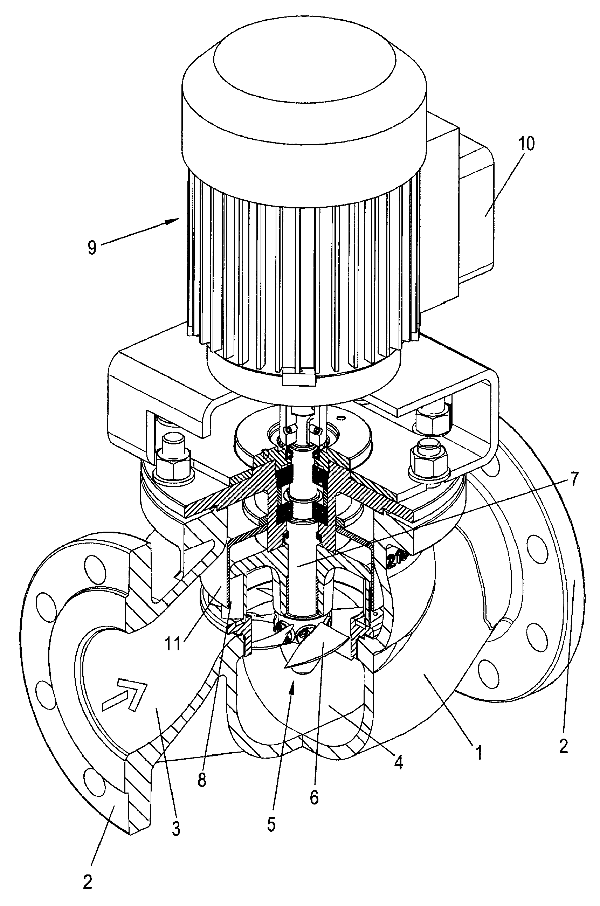

In der Figur 1 ist ein in ein Rohrleitungssystem einbaubares Stellventil dargestellt, mit einem einen Durchgang aufweisenden Gehäuse 1, wobei der Durchgang aus einer Zuführung 3 und einer Abführung 4 gebildet ist. Endseitig, d.h. an Beginn und Ende des Durchflusses ist jeweils ein Flansch 7 an das Gehäuse angeformt, an den eine Rohrleitung anschließbar ist.

Zwischen der Zuführung 3 und der Abführung 4 ist ein Drosselorgan in Form eines Laufrades 5 angeordnet, das an einen Stromerzeuger 9 angeschlossen ist und das durch ein durch das Rohrleitungssystem geführtes Medium, insbesondere ein Fluid, antreibbar ist.

Dazu ist das Laufrad 5, das gleichmäßig über den Umfang verteilte radial ausgerichtete Flügel 6 aufweist, fest an einer drehbaren Abtriebswelle 7 angeschlossen, die mit dem Stromerzeuger 9 verbunden ist.

Dieser kann aus einem Generator oder einem asynchronen Motor mit Frequenzumrichter bestehen und über einen Anschluss 10 an das bestehende Stromnetz angeschlossen sein und andererseits mit beispielsweise einem Thermostaten in Wirkverbindung stehen.

Damit das einströmende Medium, dessen Strömungsrichtung durch den Pfeil im Einlauf 3 kenntlich ist, im Wesentlichen beruhigt und/oder gerichtet auf die Flügel 6 des Laufrades 5 trifft, ist der Übergang vom Einlauf 3 zum Auslauf 4 mit einem Leitschaufelrad 8 versehen.

Bei einer entsprechenden konstruktiven Ausbildung sind die Flügel 6 des Laufrades und/oder die Schaufeln des Leitschaufelrades 8 schwenkbar gehalten und zwar derart, dass der Durchfluss des Ventils weitgehend verschlossen ist, wobei die Flügel 6 außenseitig relativ dicht an einem ringförmigen Ventilsitz 11 anliegen, ohne jedoch bei einer Drehung des Laufrades 5 behindert zu werden.

Der Verschluss des Ventils, ebenso eine Drosselung des Volumenstroms wird bei dem dargestellten Beispiel durch einen relativ zum Leitschaufelrad 8 axial verschiebbaren, das Leitschaufelrad 8 umschließenden Rohrstutzen 11 erreicht. Dieser Rohrstutzen kann auch dann Verwendung finden, wenn auf den Einsatz des Leitschaufelrades 8 verzichtet wird.

## Patentansprüche

1. Stellventil, das in ein Rohrleitungssystem einbaubar ist, mit einem einen Durchgang aufweisenden Gehäuse (1) und einem den Durchfluss eines durch das Rohrleitungssystem führbaren Mediums beeinflussenden Drosselorgan, **dadurch gekennzeichnet, dass** im Durchgang ein an einen Stromerzeuger (9) angeschlossenes, durch das strömende Medium antreibbares Laufrad (5) angeordnet ist.

2. Stellventil nach Anspruch 1, **dadurch gekennzeichnet, dass** der Stromerzeuger (9) aus einem Generator oder einem asynchronen Motor mit Frequenzumrichter besteht.

3. Stellventil nach Anspruch 1 oder 2, **dadurch gekennzeichnet, dass** das Laufrad (5) ortsfest gehalten ist.

4. Stellventil nach einem der vorhergehenden Ansprüche, **dadurch gekennzeichnet, dass** das Laufrad (5) oder eine damit verbundene, drehbare Abtriebswelle (7) axial verschiebbar gehalten ist.

5. Stellventil nach einem der vorhergehenden Ansprüche, **dadurch gekennzeichnet, dass** das Laufrad (5) in eine Schließstellung des Durchflusses bringbar ist.

6. Stellventil nach einem der vorhergehenden Ansprüche, **dadurch gekennzeichnet, dass** das Laufrad (5) fest mit der drehbaren Abtriebswelle (7) verbunden ist, die am Stromerzeuger (9) angeschlossen ist.

7. Stellventil nach einem der vorhergehenden Ansprüche, **dadurch gekennzeichnet, dass** die Abtriebswelle (7) als Hohlwelle ausgebildet ist, in der axial verschiebbar eine an eine Drosselscheibe angeschlossene Haltestange geführt ist.

8. Stellventil nach einem der vorhergehenden Ansprüche, **dadurch gekennzeichnet, dass** das Laufrad (5) das Drosselorgan bildet.

9. Stellventil nach einem der vorhergehenden Ansprüche, **dadurch gekennzeichnet, dass** der Stromerzeuger (9) zur Einspeisung des erzeugten Stroms an das Stromnetz ausgebildet ist.

10. Stellventil nach einem der vorhergehenden Ansprüche, **dadurch gekennzeichnet, dass** der Stromerzeuger (9) an einen Stromspeicher angeschlossen ist.

11. Stellventil nach einem der vorhergehenden Ansprüche, **dadurch gekennzeichnet, dass** konzentrisch zum Laufrad (5) ein Leitschaufelrad (8) vorgesehen ist.

12. Stellventil nach einem der vorhergehenden Ansprüche, **dadurch gekennzeichnet, dass** das Drosselorgan aus einem konzentrisch zum Laufrad (5) angeordneten, axial verschiebbaren Rohrstutzen (11) besteht.
